(19) Europäisches Patentamt
European Patent Office
Office européen des brevets

(11) **EP 0 546 311 B1**

(12) **EUROPÄISCHE PATENTSCHRIFT**

(45) Veröffentlichungstag und Bekanntmachung des Hinweises auf die Patenterteilung:
**06.08.1997 Patentblatt 1997/32**

(51) Int. Cl.$^6$: **B32B 31/20**, B29C 59/04, B32B 31/00

(21) Anmeldenummer: **92118726.6**

(22) Anmeldetag: **02.11.1992**

(54) **Vorrichtung und Verfahren zum Herstellen eines mehrschichtigen Folienverbundes**

Method and apparatus for producing a multilayer laminate

Dispositif et procédé pour produire un stratifié multicouche

(84) Benannte Vertragsstaaten:
**AT CH DE LI**

(30) Priorität: **07.11.1991 DE 4136679**

(43) Veröffentlichungstag der Anmeldung:
**16.06.1993 Patentblatt 1993/24**

(73) Patentinhaber:
**HOECHST AKTIENGESELLSCHAFT**
**65926 Frankfurt am Main (DE)**

(72) Erfinder:
• **Rohleder, Sabine DI. Dipl.-Ing. (TH)**
**W-6108 Weiterstadt (DE)**

• **Coutandin, Jochen, Dr. Dipl.-Phys.**
**W-6536 Langenlonsheim (DE)**
• **Kastl, Erna, DI. Dipl.-Ing. (FH)**
**W-6274 Hünstetten 2 (DE)**

(56) Entgegenhaltungen:
| | |
|---|---|
| EP-A- 0 212 232 | EP-A- 0 363 794 |
| EP-A- 0 485 896 | EP-A- 0 495 646 |
| AU-B- 527 905 | DE-A- 3 020 008 |
| FR-A- 1 441 508 | FR-A- 2 167 876 |
| GB-A- 1 220 080 | GB-A- 2 127 344 |
| US-A- 27 992 | US-A- 5 061 534 |

**Beschreibung**

Die Erfindung betrifft ein Verfahren zum Herstellen eines mehrlagigen Folienverbundes der biaxial und/oder monoaxial und/oder unverstreckte thermoplastische Kunststoffolienbänderenthält, die unter Druck- und Wärmeanwendung miteinander gesiegelt werden, wobei die Kunststoffolienbänder getrennt und im Abstand voneinander einer beheizbaren Walzenfläche zugeführt und entlang dieser Walzenfläche geführt werden, und jedes Kunststoffolienband vor dem Auflaufen auf die beheizbare Walzenfläche zusätzlich erwärmt wird sowie auf jedes Kunststoffolienband unmittelbar an seiner Auflaufstelle auf die Walzenfläche Druck ausgeübt wird.

Seitens verschiedener Branchen, wie z. B. dem Apparatebau, dem Fahrzeug- und Flugzeugbau oder der Sicherheitstechnik, besteht ein zunehmend verstärktes Interesse an hochfesten Folienverbunden und Verbundkörpern sowohl in Form von Bändern als auch von Halbzeugen, wie z.B. Platten, als auch Fertigbauteilen. Dieser Entwicklung folgend werden von Plattenherstellern Techniken zur Fertigung mechanisch höher belastbarer Produkte erarbeitet. Parallel zur Modifizierung der für die Plattenproduktion vorgesehenen Polymerwerkstoffe durch den Einbau von Verstärkungsmaterialien, wie z.B. Textil-, Glas- oder Kohlenstoffasern, werden Techniken zur Herstellung eigenverfestigter Platten durch Orientierungsmaßnahmen entwickelt. Lösungen im Rahmen dieser Techniken stellen z.B. das Walzpreßrecken oder das in der EP-A 0 207 047 beschriebene Verfahren dar, dessen wesentliche Verfahrensmaßnahme darin besteht, eine Vielzahl biaxial verstreckter, mit dünnen, koextrudierten Siegelschichten ausgerüsteter Folien zu einer beliebig dicken, homogenen Platte unter Anwendung von Druck und Wärme zu verpressen. Hierzu wird im allgemeinen der zwischen zwei Preßbleche eingelegte Folienstapel in diskontinuierlich arbeitende, hydraulische Plattenpressen in Einfach- oder Etagenbauweise eingebracht. Der Preßvorgang wird durch Verfahrensparameter, wie Druck, Temperatur und Zeit, bestimmt. Insbesondere der letzte Verfahrensparameter steht, vor allem im Falle der Durchwärmung sehr dik-ker Platten, einer kostengünstigen Herstellung von Verbundlaminaten entgegen. Kontinuierliche Druchlaufpresen, insbesondere Doppelbandpressen, stellen diesbezüglich eine praktikable, zeitsparende Lösung dar, sind aber hinsichtlich der auf ihnen zu realisierenden Geschwindigkeiten nur begrenzt einsetzbar.

Aus der EP-A - 0 485 896 ist eine Vorrichtung zum Herstellen eines mehrschichtigen Folienverbundes aus Kunststoffolien bekannt, mit einer Anzahl von Vorratsrollen, auf denen die bandörmigen Kunststoffolien aufgewickelt sind. Eine temperierbare Walze bildet ein Siegelwerkzeug, auf dessen Umfangsfläche siegelschichtfreie und mit Siegelschichten ausgestattete Kunststoffolienbänder miteinander gesiegelt werden. Entlang der Umfangsfläche der Walze liegen in gleichgroßen oder unterschiedlichen Abständen zueinander beheizte Druckwalzen an, über welche die Kunststoffolienbänder geführt werden und die Kontaktflächen zwischen den Druckwalzen und der Walze durchlaufen. Die in Abständen voneinander auf die Umfangsfläche der Walze auflaufenden Kunststoffolienbänder werden unter Druck-und Wärmeanwendung auf die übereinandergeschichtet transportierten Kunststoffolienbänder durch die Druckwalzen miteinander gesiegelt. Der Walze ist zumindest eine Kühl-, Präge- und/oder Preßeinrichtung nachgeordnet.

Die US-A 5,061,534 betrifft Verpackungsfolien und daraus hergestellte Verpackungen, die eine reduzierte Empfindlichkeit für Feuchtigkeit besitzen. Die Folien bestehen aus einer ersten Schicht aus Ethylenvinylalkohol-Copolymer und einer zweiten Schicht aus einem Vinylidenchlorid-Copolymer sowie Adhäsiv- und Isolierschichten. Die extrudierten Schmelzeströme aus Vinylidenchlorid-Copolymer und einem Adhäsiv werden in einem Adapter kombiniert, so daß die Schicht aus Vinylidenchlorid-Copolymer zu beiden Seiten mit einer Adhäsivschicht belegt ist. Dieser dreilagige Schmelzestrom wird zusammen mit den Schmelzeströmen zweier weiterer Extruder einer Koextrusionsdüse zugeführt, in der die Schmelzeströme mit dem Dreilagenschmelzestrom zu einem Fünflagenschmelzestrom kombiniert werden, der aus der Koextrusionsdüse extrudiert wird. Ein Aufsiegeln von verschiedenen Schichten bzw. Kunststoffolienbändern zu einem mehrlagigen Folienverbund findet nicht statt.

Aus der GB-A 1.220.080 ist eine Vorrichtung zum Herstellen eines mehrschichtigen Folienverbundes aus miteinander gesiegelten Kunststoffolien bekannt. Diese Vorrichtung umfaßt eine temperierbare Walze, die ein Siegelwerkzeug bildet, und deren Umfangsfläche zum Siegeln der Kunststoffolienbänder dient. Entlang der Umfangsfläche der Walze sind in gleichgroßen oder unterschiedlichen Abständen zueinander nicht beheizte Druckwalzen angeordnet, die an der Umfangsfläche der Walze anlegen. Jedes Kunststoffolienband, das von einer Vorratsrolle über die zugeordnete Druckwalze geführt ist, durchläuft die Kontaktfläche zwischen der Druckwalze und der Walze. Die in Abständen voneinander auf die Umfangsfläche der Walze auflaufenden Kunststoffolienbänder sind unter Druck- und Wärmeanwendung auf die übereinandergeschichtet transportierten Kunststoffolienbänder durch die Druckwalzen miteinander siegelbar.

In der DE-PS 35 30 309 sind ein Verfahren und eine Vorrichtung zum kontinuierlichen Herstellen von thermoplastischen Kunststoffbahnen, insbesonder für die Weiterverarbeitung zu Platten oder Folien, beschrieben, aus mindestens einer extrudierten, auf Verarbeitungstemperatur erwärmten Thermoplastbahn, die in erwärmtem Zustand zwischen zwei ortsfest angeordneten Platten unter Druck abgekühlt wird, so daß die Oberfläche der Thermoplastbahn kalibriert und geglättet wird. Die Abkühlung der Thermoplastbahn wird unter Einwirkung von Flächendruck vorgenommen, wozu sie während der Abkühlung zwischen zwei kontinuierlich bewegten, endlos umlaufenden Preßbändern geführt wird. Dabei wird ein gleichmäßiger Flächendruck von den Platten hydraulisch oder mechanisch auf die Innenseiten der sich bewegenden Preßbänder ausgeübt und von diesen auf die Thermoplastbahn übertragen. Die Platten werden auf eine niedrigere Temperatur als die Endtemperatur der Thermoplastbahn gehalten, um so ein Temperaturgefälle zwischen Thermoplastbahn, Preßband und Platte aufrechtzuerhalten. Die Abkühlung der Thermoplastbahn erfolgt, indem Wärme aus der Bahn über das Preßband auf die Platten mittels Wärmeleitung abgeführt wird. Der Flächendruck wirkt während der gesamten Dauer der Abkühlung der Thermoplastbahn zwischen den Preßbändern ein.

Aufgabe der Erfindung ist es, ein Verfahren der eingangs beschriebenen Art so weiterzuentwickeln, daß eine kontinuierliche, kostensparende Fertigung eines Folienverbundes vorgegebener Dicke mit hoher Geschwindigkeit aus siegelschichtfreien und mit Siegelschichten ausgestatteten Kunststoffolienbändern mit gegenüber extrudierten Folien gleicher Dicke wie der Folienverbund verbesserten mechanischen Eigenschaften und zumindest gleichbleibenden optischen Eigenschaften des Folienverbundes gegenüber dem einzelnen Kunststoffolienband ermöglicht wird.

Diese Aufgabe wird durch ein Verfahren nach der Erfindung in der Weise gelöst, daß der Folienverbund durch kontinuierliches, additives Aufsiegeln einzelner bewegter Kunststoffolienbänder, die alternierend siegelschichtfrei und mit zumindest einer Siegelschicht ausgerüstet sind, auf ein bewegtes erstes Kunststoffolienband bis zu einer vorgegebenen Enddicke aufgebaut wird und nach dem Ablösen von der Walzenfläche mit Kühlluft angeblasen und/oder mit Kühlwalzen und/oder einer gekühlten Doppelbandpresse abgekühlt wird und/oder ein- oder beidseitig geprägt wird.

Die weitere Ausgestaltung des Verfahrens ergibt sich aus den Maßnahmen der Patentansprüche 2 bis 9.

Der Dickenaufbau eines Folienverbundes in Bandform durch kontinuierliches, additives Auflaminieren einzelner Kunststoffolienbänder wird erreicht, indem die Heißsiegelschichten der Kunststoffolienbänder unmittelbar vor dem Zusammenführen der Bänder kurzzeitig angeschmolzen und mittels Liniendruck mit den siegelschichtfreien Kunststoffolienbändern verpreßt werden. Gegenüber dem zeitaufwendigen, herkömmlichen Verpressen eines kompakten Folienstapels in Plattenpressen bzw. dem Auslösen des für eine homogene Verbindung notwendigen thermischen Folienschrumpfes im Falle einer Rohrfertigung, ergeben sich bei der Erfindung die Vorteile, daß der Aufheiz- und Anschmelzvorgang der nur wenige µm dicken Siegelschichten der Kunststoffolienbänder in extrem kurzer Zeit und damit auch unter weitgehender Vermeidung einer thermischen Schädigung des Kunststoffmaterials durchgeführt werden kann, daß bei dem kontinuierlichen Verfahren relativ hohe Geschwindigkeiten erreichbar sind und daß der Folienverbund als Rollenware hergestellt wird, die problemlos weiterverarbeitet werden kann. Bei den siegelschichtfreien Kunststoffolienbändern handelt es sich insbesondere um unverstreckte Kunststoffolien, die im Vergleich zu verstreckten Folien einen wesentlich höheren Weiterreißwiderstand besitzen. Im Gegensatz zum Pressen eines kompakten Folienstapels, in dem jede Folienlage ein anderes Temperaturprofil hat, erfolgt das Verpressen bei der Erfindung unter stets konstanten, schonenden Konditionen für jedes der einzelnen Kunststoffolienbänder. Im Vergleich zu dem Verpressen eines Folienstapels mittels einer Doppelbandpresse ergeben sich niedrigere Investitionskosten, eine höhere Verarbeitungsgeschwindigkeit, eine Vereinfachung der Variationsmöglichkeiten zur Strukturierung, Kalibrierung und der Weiterverarbeitung der Oberflächen des Folienverbundes sowie ein gegenüber verstreckten Folien erhöhter Weiterreißwiderstand des Folienverbundes.

Die Erfindung wird im folgenden anhand der Zeichnungen näher erläutert. Es zeigen:

Figur 1        eine schematische Ansicht einer ersten Ausführungsform der Vorrichtung nach der Erfindung,

Figur 2        eine schematische Ansicht einer zweiten Ausführungsform der Vorrichtung, mit einer Kühlanordnung und einer temperierbaren Doppelbandpresse für den Folienverbund,

Figur 3        eine dritte Ausführungsform der Vorrichtung in schematischer Darstellung, mit einer Walzenanordnung zum Dehnen des Folienverbundes,

Figur 4        eine vierte Ausführungsform der Vorrichtung in schematischer Darstellung, mit Prägefolien zum Strukturieren der Oberflächen des Folienverbundes,

Figur 5        eine fünfte Ausführungsform der Vorrichtung, mit einem Prägeband zum Strukturieren der Oberflächen des Folienverbundes,

Figur 6a       eine sechste Ausführungsform der Vorrichtung mit einer Prägestation, zwischen deren Walzen der Folienverbund hindurchläuft und geprägt wird,

Figur 6b       eine gegenüber der Ausführungsform nach Fig. 6a leicht abgewandelte Prägestation, bei der der Folienverbund über Führungswalzen geführt ist und von diesen geprägt wird, und

Figur 7        eine siebente Ausführungsform der Vorrichtung, bei welcher der Folienverbund in Planlage eine Kühlanordnung durchläuft, und

Figur 8        einen schematischen Schnitt durch einen Folienverbund.

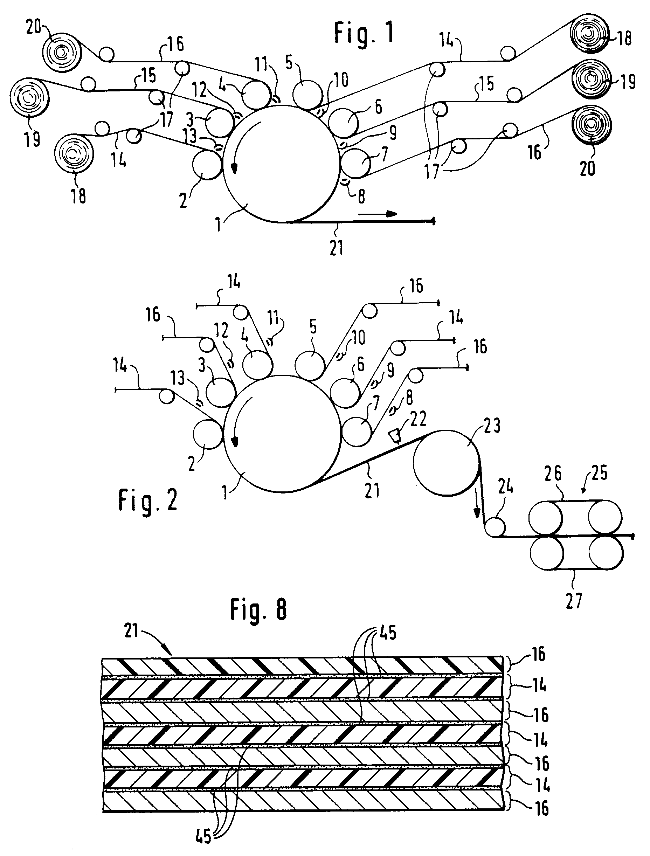

In Figur 1 ist in schematischer Schnittansicht eine erste Ausführungsform der Vorrichtung nach der Erfindung zum Herstellen eines mehrschichtigen Folienverbundes 21 dargestellt. Eine temperierbare Walze 1, bei der es sich im allgemeinen um eine angetriebene Stahlwalze großen Durchmessers handelt, besitzt eine hochglanzpolierte oder mattierte Umfangsfläche und bildet ein Siegelwerkzeug für eine Anzahl von Kunststoffolienbändern, die miteinander gesiegelt werden. Bei diesen Kunststoffolienbändern, die auf Vorratsrollen 18, 19, 20 aufgewickelt sind, handelt es sich beispielsweise um biaxial verstreckte Kunststoffolienbänder 14, monoaxial verstreckte Kunststoffolienbänder 15 und unverstreckte Kunststoffolienbänder 16. Entlang der Umfangsfläche der Walze 1 sind in gleichgroßen oder unterschiedlichen Abständen zueinander beheizte Druckwalzen 2, 3 bis 7 angeordnet, die unter Druck an die Umfangsfläche der Walze 1 anliegen. Bei sämtlichen in den Figuren 1 bis 7 dargestellten Ausführungsbeispielen der Vorrichtung nach der Erfindung sind nicht mehr als sechs derartige Kunststoffolienbänder aus Platzgründen dargestellt, jedoch können bis zu zwanzig und mehr einzelne Kunststoffolienbänder miteinander gesiegelt werden. Die Anzahl der Druckwalzen ist gleich oder größer als die Anzahl der Kunststoffolienbänder, die so gewählt wird, daß die Dicke des Folienverbundes 21 bis zu 1 mm betragen kann.

Wie Figur 1 zeigt, ist das einzelne, biaxial verstreckte Kunststoffolienband auf einer Vorratsrolle 18 aufgewickelt, während jedes einzelne monoaxial verstreckte Kunststoffolienband 15 und jedes unverstreckte Kunststoffolienband 16 auf eine Vorratsrolle 19 bzw. 20 aufgewickelt ist. Es ist selbstverständlich, obgleich dies in Figur 1 nicht dargestellt ist, daß alle miteinander zu siegelnden Kunststoffolienbänder aus dem gleichen Kunststoff, beispielsweise Polypropylen mit der gleichen Veredelung, d.h. ausschließlich biaxial oder monoaxial verstreckt, mit unverstreckten, siegelschichtfreien Kunststoffolien aus Polypropylen zu dem Folienverbund 21 gesiegelt werden können. Es können selbstverständlich auch Folien aus unterschiedlichen Ausgangsmaterialien zu einem Folienverbund gesiegelt werden. Vorraussetzung ist lediglich die Siegelbarkeit der mit Siegelschichten ausgestatteten Einzelfolien mit den siegelschichtfreien Folien. Das einzelne Kunststoffolienband wird über Führungsrollen 17 der zugehörigen Druckwalze 2, 3, ... oder 7 zugeführt. Bei diesen Druckwalzen handelt es sich um angetriebene oder nicht angetriebene, beheizbare Walzen, deren Durchmesser im Vergleich zu dem Durchmesser der Walze 1 sehr viel kleiner ist, was im Hinblick auf ihre Anzahl von bis zu 20 und mehr Stück selbsterklärend ist. Es werden abwechselnd Kunststoffolienbänder, die beidseitig mit Siegelschichten ausgestattet sind, die während des Siegelvorgangs der Kunststoffolienbänder angeschmolzen werden, und siegelschichtfreie Kunststoffolienbänder aufeinander aufgeschichtet. Bei den Druckwalzen 2 bis 7 handelt es sich beispielsweise um Presseure, deren Metallwalzenkörper mit temperaturbeständigen Gummischichten belegt sind und die über nicht dargestellte Heizsysteme beheizt werden. Ebenso können die Führungsrollen 17, die den einzelnen Presseuren vorgeschaltet sind, vorgeheizt sein, so daß die von den Vorratsrollen den Presseuren zugeführten Kunststoffolienbahnen schon aufgeheizt sind. Die Druckwalzen bzw. Presseure 2 bis 7 sind hydraulisch, pneumatisch oder mechanisch über ein Hebelsystem verfahrbar, so daß sie von der Umfangsfläche der Walze 1 abgehoben werden können, um das Einführen des einzelnen Kunststoffolienbandes in den Spalt zu erleichtern, der von der Umfangsfläche der Walze 1 und der jeweiligen Druckwalze 2 bis 7 begrenzt wird. Die Druckwalzen können auch reine Metallwalzen ohne Gummibeschichtung sein.

Die Positionierung der Druckwalzen bzw. der Presseure in ihren Arbeitsstellungen, bzw. das Aufbringen des Drucks, mit dem die Druckwalzen an die Walze 1 angelegt werden und dabei einen entsprechenden Siegeldruck ausüben, um das jeweilige Kunststoffolienband auf den lagenmäßig anwachsenden Folienverbund zu siegeln, kann, wie schon erwähnt, entweder hydraulisch, pneumatisch oder durch einen Hebelmechanismus geschehen.

Nahe den Kontaktflächen von der Walze 1 und den einzelnen Presseuren ist jeweils eine verfahrbare Heizeinrichtung 8, 9, ... 13 zum gezielten Verändern der mechanischen Eigenschaften der Ausgangsfolie, z.B. durch Schrumpfen und, wenn nötig, zusätzlich zu den beheizten Walzen, zum Anschmelzen der Siegelschichten der Kunststoffolienbänder angeordnet. Bei dieser Heizeinrichtung handelt es sich insbesondere um Infrarotstrahler, die entlang einem Teilstück der Bahn des Kunststoffolienbandes verfahrbar sind. Diese Heizeinrichtungen können auch mit Heißluft beaufschlagbare Luftdüsen sein, die das Anschmelzen der Siegelschichten der Kunststoffolienbänder unmittelbar vor dem Zusammenführen im jeweiligen Spalt bewirken. In Figur 2 sind die Heizeinrichtungen 8 bis 13 in Positionen außerhalb der Spalten zwischen der Walze 1 und den Druckwalzen 2 bis 7 dargestellt. Der Abstand der Heizeinrichtungen zu der Umfangsfläche der Walze 1 ist gleichfalls einstellbar.

Die Dicke des geschichteten Folienverbundes 21 liegt im Bereich von 60 bis 1.000 μm.

Die in Figur 2 gezeigte zweite Ausführungsform der erfindungsgemäßen Vorrichtung ist in bezug auf die Walze 1, die Druckwalzen bzw. Presseure 2 bis 7 und die Zuführung der Kunststoffolienbänder 14 und 16 ähnlich aufgebaut wie die erste Ausführungsform nach Figur 1. Aus Platzgründen sind bei dieser Ausführungsform die Vorratsrollen für die Kunststoffolienbänder weggelassen. Es werden beispielsweise mit dieser Vorrichtung biaxial verstreckte Kunststoffolienbänder 14 alternierend mit unverstreckten Kunststoffolienbändern 16 zu dem Folienverbund 21 gesiegelt bzw. laminiert. Diese Ausführungsform der Vorrichtung ist mit Zusatzaggregaten ausgerüstet, wie beispielsweise einer Kühleinrichtung aus einem Ventilator oder einer Luftdüse 22, aus der Kühlluft auf die Oberseite des Folienverbundes 21 geblasen wird, und/oder aus einer temperierbaren Kühlwalze 23, über die der Folienverbund 21 entlang einem Teilumfang nach dem Ablösen von der Walze 1 geführt ist. Nach der Kühlwalze 23 ist eine Umlenkwalze 24 vorgesehen, durch welche der Folienverbund 21 aus seiner Vertikalrichtung in eine Horizontalrichtung umgelenkt wird, um anschließend eine temperierbare Doppelbandpresse 25 zu durchlaufen, die aus zwei endlos umlaufenden Preßbändern 26 und 27 besteht, die eine gemeinsame Druckzone bilden, durch die der Folienverbund 21 hindurchgeführt wird. Mit Hilfe dieser Doppelbandpresse 25 kann sowohl die Ober- als auch die Unterseite des Folienverbundes 21 in einer vorgegebenen Weise strukturiert oder auch geglättet werden. Die Doppelbandpresse kann auch zur Kühlung des Folienverbundes genutzt werden, entweder allein oder in Kombination mit dem Ventilator und/oder der Kühlwalze. Ebenso kann die Kühlung durch ein Kühlbad allein oder in Verbindung mit den zuvor erwähnten Kühlaggregaten erfolgen.

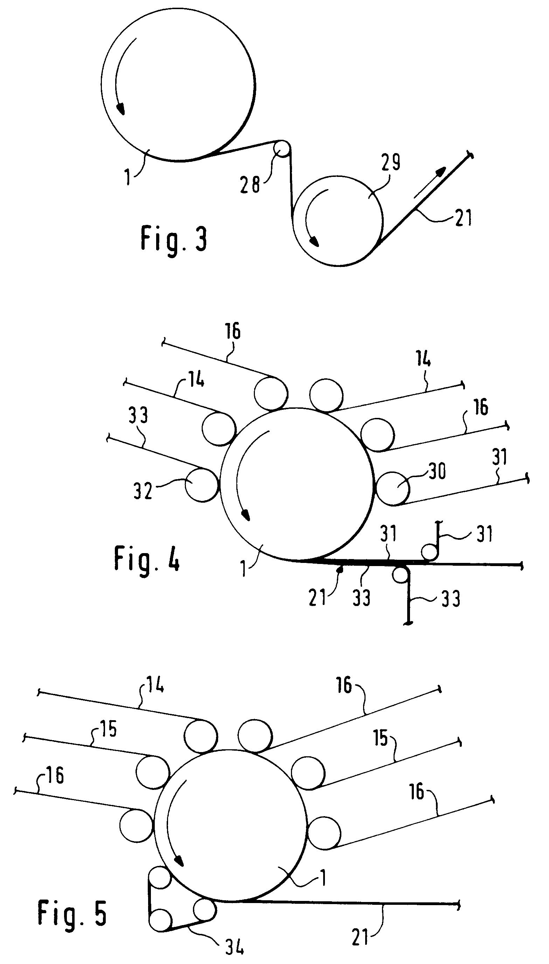

In Figur 3 ist eine dritte Ausführungsform der Vorrichtung gezeigt, die sich gegenüber der ersten und zweiten Ausführungsform der Vorrichtung dadurch unterscheidet, daß als Zusatzaggregat eine Walzenanordnung aus einer temperierbaren Walze 28 und einer angetriebenen, gleichfalls temperierbaren Walze 29 vorhanden ist, wobei der Durchmesser der Walze 29 ein Mehrfaches des Durchmessers der Walze 28 beträgt. Mit dieser Walzenanordnung wird der Rollneigung des Folienverbundes 21 durch Dehnen desselben, indem eine hohe Zugkraft auf den Folienverbund ausgeübt wird, entgegengewirkt. Diese Rollneigung entsteht beispielsweise dadurch, daß das oberste Kunststoffolienband eine größere Länge aufweist als das unterste Kunststoffolienband des geschichteten Folienverbundes 21, das die Grundschicht des Schichtaufbaus bildet.

Der Folienverbund 21 wird über die Walze 28 mit dem kleinen Durchmesser gezogen, wodurch es zu einer Streckung der Basisschicht bzw. des untersten Kunststoffolienbandes kommt und somit die Längenunterschiede zwischen dem untersten und obersten Kunststoffolienband ausgeglichen werden, d.h. die Rollneigung des Folienverbundes 21 eliminiert wird.

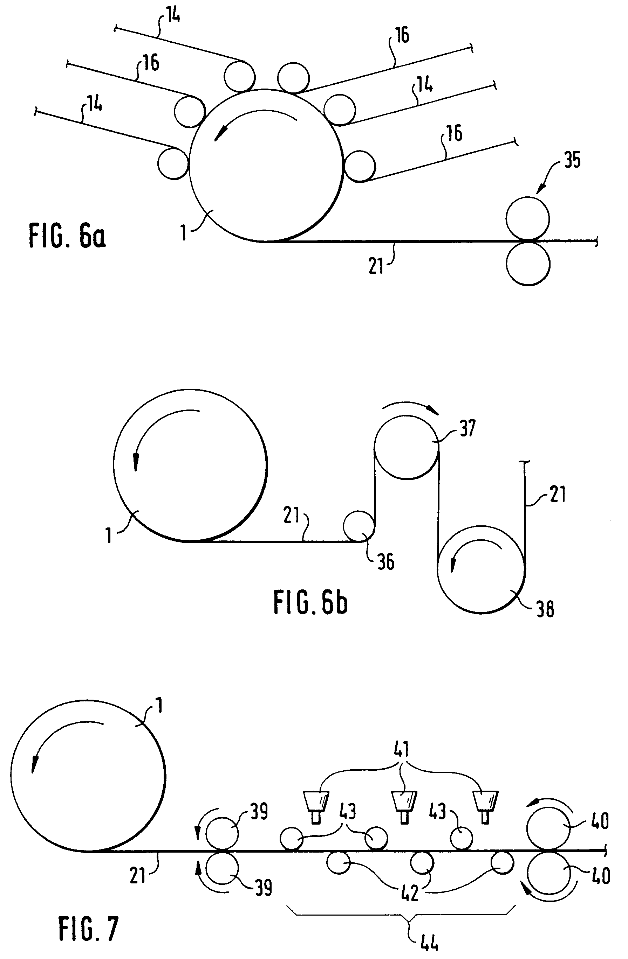

In den Figuren 4 bis 6a und 6b sind verschiedene Prägeeinrichtungen für den Folienverbund 21 als Zusatzaggregate zu der Walze 1 dargestellt. Bei der in Figur 4 gezeigten vierten Ausführungsform der Vorrichtung sind zwei Prägefolien 31 und 33 vorhanden, die über Teilumfänge der Walze 1 geführt sind. Die Vorratsrollen für diese Prägefolien sowie für die Kunststoffolienbänder 14 und 16 sind aus Gründen der besseren Übersichtlichkeit weggelassen worden. Die Prägefolie 31 läuft von der nicht gezeigten Vorratsrolle über eine Druckwalze 30 auf die Umfangsfläche der Walze 1 als Unterlage des schichtmäßig aufzubauenden Folienverbundes 21 auf. Als unterste Schicht des Folienverbundes 21 wird beispielsweise ein unverstrecktes Kunststoffolienband 16 der Walze 1 zugeführt, auf das aufeinanderfolgend ein biaxial verstrecktes und ein unverstrecktes Kunststoffolienband 14, 16, 14 aufgeschichtet werden. Die zuletzt aufgeschichtete biaxial verstreckte Folie 14 hat entweder zwei Siegelschichten oder eine Siegelschicht, die dann der unverstreckten Folie 16 zugewandt ist und mit dieser zusammengesiegelt wird. Als letzte und oberste Schicht gelangt die Prägefolie 33 über eine Druckwalze 32 auf den mehrschichtigen Folienverbund 21. Nach dem Ablösen des Folienverbundes 21 und der beiden Prägefolien 31 und 33 von der Walze 1 werden die Prägefolien über Umlenkrollen von dem Folienverbund 21 abgelöst und auf nicht gezeigte Aufwickelrollen aufgerollt.

Die fünfte Ausführungsform der Vorrichtung, wie sie in Figur 5 schematisch gezeigt ist, besitzt als Zusatzaggregat ein über Rollen endlos umlaufendes Prägeband 34, das an einem Teilumfang der Walze 1 anliegt. Mit Hilfe dieses beispielsweise metallischen Prägebandes 34 ist es möglich, nur die Unterseite des Folienverbundes 21 zu strukturieren, während die Oberseite unstrukturiert bleibt. Die übrigen Einzelteile dieser Vorrichtung zum Zuführen der einzelnen Kunststoffolienbänder sind die gleichen wie bei den Ausführungsformen der Vorrichtung nach den Figuren 1 bis 4 und werden daher nicht nochmals beschrieben. Die Prägung der Unterseite mit Hilfe des Prägebandes 34 erfolgt vor dem Ablösen des Folienverbundes 21 von der Walze 1. Nach dem Ablösen des Folienverbundes 21 von der Walze kann noch eine Kühlbehandlung in einer entsprechenden Kühlanordnung, die nicht gezeigt ist, vorgenommen werden.

Bei der in Figur 6a gezeigten sechsten Ausführungsform der erfindungsgemäßen Vorrichtung ist für das beidseitige Prägen des Folienverbundes 21 eine Prägestation 35, die zwei Prägerollen umfaßt, in Laufrichtung des Folienverbundes 21 nach der Walze 1 angeordnet. Der Folienverbund 21 durchläuft nach dem Ablösen von der Walze 1 einen Spalt zwischen den beiden Prägewalzen der Prägestation 35, so daß die Ober- und Unterseite des Folienverbundes 21 eine entsprechende Strukturierung erfahren.

Eine andere Möglichkeit der Oberflächenstrukturierung des Folienverbundes 21 ergibt sich mit der in Figur 6b dargestellten Vorrichtung. Hierzu wird der Folienverbund 21 mit hoher Zugspannung nach dem Ablösen von der Walze 1 über eine Umlenkrolle 36 und in Mäanderform über temperierbare Walzen 37 und 38 gezogen, die in Vertikalrichtung zueinander versetzt sind. Die Oberflächen der Walzen 37 und 38 sind entweder hochglanzpoliert oder strukturiert. Durch die hohe Zugspannung, die auf den Folienverbund 21 durch die entsprechende Antriebsgeschwindigkeit der Walzen ausgeübt wird, kommt es zu einer entsprechenden Strukturierung der beiden Seiten des Folienverbundes 21.

In Figur 7 ist eine Kühlanordnung 44 bzw. Kühlstrecke gezeigt, die nach der Walze 1 angeordnet ist. Eine derartige Kühlanordnung 44 ist bei allen Ausführungsformen, wie sie in den voranstehenden Figuren 1 bis 6b gezeigt sind, vorhanden. Die Kühlanordnung 44 besteht aus einer Anzahl von Ventilatoren 41 oder Luftdüsen, die mit Kühlluft beaufschlagt werden, und oberhalb des in Planlage transportierten Folienverbundes 21 angebracht sind. Desweiteren umfaßt die Kühlanordnung 44 untere Kühlwalzen 42, über die der Folienverbund 21 transportiert wird, und obere Kühlwalzen 43, die mit der Oberseite des Folienverbundes 21 in Kontakt stehen. Die Kühlwalzen 42 und 43 sind zueinander versetzt, so daß sie alternierend mit der Ober- und Unterseite des Folienverbundes 21 in Berührung stehen.

In Figur 8 ist ein schematischer Schnitt durch einen Folienverbund 21 aus beispielsweise 7 Lagen von Kunststoff-

folienbändern 16, 14 gezeigt, die alternierend aufeinandergeschichtet sind. Die unverstreckten Kunststoffolien 16, z. B. aus Polypropylen, sind ohne Siegelschichten, während die biaxial verstreckten Folien 14 aus Polypropylen an jeder Seite eine Siegelschicht 45 tragen. Anstelle von biaxial verstreckten Kunststoffolien 14 können auch monoaxial verstreckte Kunststoffolien 15, die an beiden Seiten Siegelschichten tragen, verwendet werden. Ebenso sind Kombinationen von biaxial, monoaxial verstreckten und unverstreckten Kunststoffolien in beliebiger Reihenfolge möglich. Ein Folienverbund 21 aus 3 Lagen von Kunststoffolien besteht beispielsweise aus einr 50 μm dicken verstreckten PP-Folie mit einer Siegelschicht, einer auflaminierten unverstreckten, siegelschichtfreien PP-Monofolie von 25 μm Dicke und einer 50 μm dicken, verstreckten PP-Folie mit einer der Monofolie zugewandten Siegelschicht. Der Weiterreißwiderstand eines solchen Folienverbundes beträgt nach DIN 53363 in Querrichtung 23,4 N/mm und in Längsrichtung 26,6 N/mm. Im Vergleich dazu betragen diese Werte bei einem Folienverbund ohne unverstreckte PP-Monofolie in Querrichtung 10,3 und in Längsrichtung 20,7 N/mm. Bei dem Folienverbund nach der Erfindung ist somit der Weiterreißwiderstand in Querrichtung um den Faktor 2,27 größer als bei einem herkömmlichen Verbund. Der Grund hierfür ist, daß eine verstreckte PP-Folie durch den Streckprozeß einen wesentlich niedrigeren Weiterreißwiderstand als eine unverstreckte Folie aus dem gleichen Material hat. Durch das Kaschieren der beiden Folienarten wird jedoch der Weiterreißwiderstand durch die unverstreckte PP-Folie deutlich erhöht. Die Verbundfestigkeit in N/15 mm, gemessen nach dem T-Peel Test, hängt von der Kaschier- bzw. Siegeltemperatur ab, wie aus der nachfolgenden Tabelle ersichtlich ist.

Tabelle

| Siegeltemperatur (°C) | 120 | 130 | 140 | 150 |
|---|---|---|---|---|
| Verbundfestigkeit (N/15 mm) | 0,5 | 1,2 | 2,1* | 2,2* |

* Ab 140 °C Siegeltemperatur erfolgt bei dem Test ein Einreißen des Folienverbundes, da dann die Verbundfestigkeit gleich bzw. größer als die innere Festigkeit der Folien des Folienverbundes ist.

Werden verstreckte siegelschichtfreie und verstreckte mit Siegelschichten ausgestattete Folien alternierend aufeinandergeschichtet, so kann z. B. die Basisschicht beider Folien aus einem PP-Homopolymer mit einer Schmelztemperatur $T_{m1}$ = 165 - 170 °C und die Siegelschicht aus einem PP-Copolymer mit einer Schmelztemperatur $T_{m2}$ = 120 - 140 °C bestehen. Die Verarbeitungstemperatur T der Folienlagen genügt der Beziehung

$$T_{m1} > T \geq T_{m2}$$

Weitere Möglichkeiten, verschiedene Folien miteinander zu einem Folienverbund zu siegeln, ergeben sich in der Kombination einer verstreckten Polyethylenterephthalatfolie (oPET) mit Siegelschichten mit einer verstreckten, siegelschichtfreien Polyethylenterephthalatfolie (Polyester), einer oPET-Folie mit Siegelschichten mit einer siegelschichtfreien, amorphen PET-Folie oder einer oPP-Folie mit Siegelschichten mit einer siegelschichtfreien Polyethylenfolie (PE-Folie).

Generell sind siegelschichtfreie Polyolefin-Folien für einen Verbund mit siegelschichttragenden Folien geeignet.

Im folgenden wird die Betriebsweise der einzelnen Ausführungsformen der Erfindung näher beschrieben. Die einzelnen Kunststoffolienbänder 14 bis 16 sind auf Vorratsrollen 18, 19 und 20 aufgewickelt und werden über Führungsrollen 17 der Umfangsfläche der Walze 1 zugeführt. Die in Figur 1 auf der rechten Seite der Walze 1 als unterstes Kunststoffolienband gezeigte unverstreckte Kunststoffolie 16 wird als unterste bzw. als Basisschicht um einen großen Teilumfang der Walze 1 herumgeführt. Dieses Kunststoffolienband 16 besitzt keine Siegelschicht. In einem bestimmten Abstand von der Auflaufstelle des Kunststoffolienbandes 16 auf die Walze 1 befindet sich die Auflaufstelle für das monoaxial verstreckte Kunststoffolienband 15, das erwärmt wird. Dieses Kunststoffolienband 15, mit zwei Siegelschichten ausgerüstet, wird unter Druckanwendung durch die Druckwalze 6 auf das Kunststoffolienband 16 aufgesiegelt. Die nächste Auflaufstelle für ein weiteres Kunststoffolienband 14 auf die Umfangsfläche der Walze 1 befindet sich im gleichen Abstand von der Druckwalze 7 entfernt, der zwischen den beiden Druckwalzen 7 und 6 vorhanden ist. Dieses weitere Kunststoffolienband 14 mit zwei Siegelschichten wird gleichfalls durch eine Heizeinrichtung 10 wärmebehandelt und durch den ausgeübten Druck der Druckwalze 5 auf die beiden schon miteinander gesiegelten Kunststoffolienbänder 16 und 15 auflaminiert. Auf die gleiche Weise werden dann der Reihe nach noch ein siegelschichtfreies, unverstrecktes Kunststoffolienband 16, ein monoaxial verstrecktes Kunststoffolienband 15 mit zwei Siegelschichten sowie ein biaxial verstrecktes Kunststoffolienband 14, das eine dem Kunststoffolienband 15 zugewandte Siegelschicht hat oder auch siegelschichtfrei sein kann, der Reihe nach unter Druck und Wärmeanwendung auf die schon miteinander gesiegelten drei Kunststoffolienbänder zu dem endgültigen Folienverbund 21 aufgesiegelt.

Auf diese Art und Weise kann beispielsweise ein Folienverbund aus bis zu zwanzig Einzelfolien aus Polypropylen aufgebaut werden, wobei die Einzelfolien biaxial und/oder monoaxial verstreckt und/oder unverstreckt, thermoplastisch, ohne Siegelschicht oder ein- oder beidseitig mit Siegelschichten ausgerüstet sein können. Desweiteren können die Einzelfolien druckvorbehandelt oder nicht vorbehandelt sein. Durch den Einsatz der Heizeinrichtungen in Gestalt der Infrarotstrahler 8 bis 13 können die mechanischen Eigenschaften der Ausgangsfolien, z.B. bei orientierten Folien durch Schrumpfen, und somit auch die Eigenschaften des Folienverbundes nach Wunsch beeinflußt werden. Bei dem Verfahren können gleichartige oder unterschiedliche Kunststoffolienbänder miteinander gesiegelt werden. Das bezieht sich sowohl auf veredelte als auch nichtveredelte Ausgangsfolien. Anstelle eines Teils der Kunststoffolienbänder können andere Materialien, z.B. Metallfolien, Papierbahnen, mit den übrigen Kunststoffolienbändern abwechselnd aufeinander geschichtet und miteinander gesiegelt werden. Bei der Wärmeanwendung muß beachtet werden, daß die Siegeltemperatur unterhalb der Schmelztemperatur der einzelnen Kunststoffolienbänder gehalten werden muß, wobei im allgemeinen die unverstreckten Folienbänder gegenüber den verstreckten Folienbändern eine niedrigere Schmelztemperatur besitzen.

Durch das Erwärmen jedes Kunststoffolienbandes vor dem Auflaufen auf die Umfangsfläche der beheizten Walze 1 werden die Siegelschichten der Kunststoffolienbänder angeschmolzen. Die benötigte Siegeltemperatur liegt, je nach dem Siegelrohstoff, zwischen 90 ° und 140 °C. Da die Siegeltemperatur stets unterhalb der Schmelztemperatur von Polypropylen gehalten wird, werden die in den einzelnen Kunststoffolienbändern vorhandenen Orientierungen durch die Verstreckung auch nach dem Siegeln beibehalten.

Nach dem Abzug von der Walze 1 wird der Folienverbund 21 nach Figur 1 über nicht gezeigte Führungswalzen aufgewickelt und ist sodann für eine Weiterverarbeitung vorgesehen.

Bei den in den Figuren 2 bis 7 gezeigten Ausführungsformen der Vorrichtung wird der Folienverbund 21 nach dem Ablösen von der Umfangsfläche der Walze 1 zusätzlichen Verfahrensschritten unterzogen, wie beispielsweise mit Kühlluft durch den Ventilator 22 in Figur 2 angeblasen und durch Kontakt mit der temperierbaren Kühlwalze 23 und/oder der gekühlten Doppelbandpresse 25 abgekühlt. Anstelle des Ventilators 22 kann auch eine Luftdüse verwendet werden, durch die Kühlluft auf die Oberseite des Folienverbundes 21 geblasen wird. Durch das Abkühlen des Folienverbundes 21 wird seine Planlage verbessert.

Mit den Zusatzaggregaten gemäß der Figur 3 zu der Vorrichtung nach der Erfindung kann der Folienverbund 21 durch die temperierbare Walze 28 und die angetriebene temperierbare Walze 29 gedehnt werden, um einer auftretenden Rollneigung des Folienverbundes entgegenzuwirken.

Weitere Verfahrensmaßnahmen zur Behandlung des Folienverbundes 21 schließen eine ein- oder beidseitige Prägung des Folienverbundes ein, wobei unterschiedliche Prägemaßnahmen getroffen werden können. Mit den Zusatzaggregaten gemäß den Figuren 4 bis 7 werden diese Prägungsverfahrensschritte durchgeführt. Eine einseitige Prägung der Unterseite des Folienverbundes 21 erfolgt mit dem endlos, geschlossen umlaufenden Prägeband 34 aus Metall, wie dies in Figur 5 dargestellt ist. Eine beidseitige Prägung des Folienverbundes 21 wird in der Prägestation 35 vorgenommen, die aus zwei Prägerollen besteht, durch deren Walzenspalt der Folienverbund 21, wie in Figur 6a gezeigt, hindurchläuft. Ebenso ist eine beidseitige Prägung des Folienverbundes 21 mit Hilfe der beiden Prägefolien 31 und 33 durchführbar, wie dies in Figur 4 dargestellt ist. Diese beiden Prägefolien schließen über verschieden große Teilumfänge der Walze 1 den Folienverbund 21 beidseitig ein, und durch die entsprechende Druckanwendung auf den mehrschichtigen Folienverbund und auf die mitlaufenden Prägefolien werden die Unter- und die Oberseite des Folienverbundes 21 entsprechend den Mustern der Prägefolien strukturiert.

Eine andere Verfahrensmaßnahme zum Strukturieren des Folienverbundes 21 besteht bei der Vorrichtung nach Figur 6b darin, den Folienverbund mäanderartig über antreibbare und temperierbare Walzen 37, 38 zu führen und durch die regelbare Umlaufgeschwindigkeit dieser Walzen eine variable Zugspannung auf den Folienverbund 21 auszuüben, wodurch es gleichfalls zu einer Strukturierung der Oberflächen des Folienverbundes kommt. Eine weitere Möglichkeit, die Folie ein- oder beidseitig zu prägen, besteht darin, die Walzen 37 und/oder 38 als Prägewalzen auszugestalten.

Ist eine besonders gute Planlage des Folienverbundes 21 gewünscht, so erfolgt eine intensive Kühlung bei horizontalem Folienverbundlauf mit der Vorrichtung nach Figur 7, bei der in Kombination temperierbare Kühlwalzen und Ventilatoren bzw. Luftdüsen, durch die Kühlluft auf die Oberfläche des Folienverbundes geblasen wird, zusammenwirken.

Die Folienverbunde können als Ausgangsmaterial zur Herstellung mehrlagiger Dickfolien oder Platten verwendet werden, indem anstelle der einzelnen Kunststoffolienbänder derartige Folienverbunde, wie sie nach den voranstehend beschriebenen Verfahren produziert werden, miteinander auf die gleiche Weise wie die Folienbänder gesiegelt werden.

**Patentansprüche**

1. Verfahren zum Herstellen eines mehrlagigen Folienverbundes, der biaxial und/oder monoaxial und/oder unverstreckte thermoplastische Kunststoffolienbänder enthält, die unter Druck- und Wärmeanwendung miteinander gesiegelt werden, wobei die Kunststoffolienbänder getrennt und im Abstand voneinander einer beheizbaren Walzenfläche zugeführt und entlang dieser Walzenfläche geführt werden, und jedes Kunststoffolienband vor dem Auflaufen auf die beheizbare Walzenfläche zusätzlich erwärmt wird sowie auf jedes Kunststoffolienband unmittelbar an seiner Auflaufstelle auf die Walzenfläche Druck ausgeübt wird, wobei der Folienverbund durch kontinuierliches, additives Aufschichten und Aufsiegeln einzelner bewegter Kunststoffolienbänder, die alternierend siegelschichtfrei und mit zumindest einer Siegelschicht ausgerüstet sind, auf ein bewegtes erstes Kunststoffolienband bis zu einer vorgegebenen Enddicke aufgebaut wird und nach dem Ablösen von der Walzenfläche mit Kühlluft angeblasen und/oder mit Kühlwalzen und/oder einer gekühlten Doppelbandpresse abgekühlt wird und/oder ein- oder beidseitig geprägt wird.

2. Verfahren nach Anspruch 1, dadurch gekennzeichnet, daß gleichartige oder unterschiedliche Kunststoffolienbänder miteinander gesiegelt werden.

3. Verfahren nach Anspruch 2, dadurch gekennzeichnet, daß die abwechselnd aufeinandergeschichteten mono- und/oder biaxial verstreckten, siegelschichtfreien und mit Siegelschichten ausgerüsteten Monofolienbänder aus demselben Polymerwerkstoff miteinander gesiegelt werden, wobei die Folienbänder gegenüber den Siegelschichten eine höhere Schmelztemperatur aufweisen.

4. Verfahren nach Anspruch 1, dadurch gekennzeichnet, daß die Verarbeitungstemperatur unterhalb der Schmelztemperatur $T_{m1}$ der verstreckten Kunststoffolienbänder gehalten wird.

5. Verfahren nach den Ansprüchen 3 und 4, dadurch gekennzeichnet, daß die Verarbeitungstemperatur T der Folienbänder gleich/größer der Schmelztemperatur bzw. Siegeltemperatur $T_{m2}$ der Siegelschichten und kleiner als die Schmelztemperatur $T_{m1}$ des Polymerwerkstoffs der Folienbänder gewählt wird.

6. Verfahren nach Anspruch 3, dadurch gekennzeichnet daß der Folienverbund nach dem Ablösen von der Walzenfläche über eine Walzenanordnung mit angetriebenen Walzen von unterschiedlichen Durchmessern geführt und durch diese eine Zugspannung auf den Folienverbund ausgeübt wird, der gedehnt wird, um seiner Rollneigung entgegenzuwirken.

7. Verfahren nach Anspruch 1, dadurch gekennzeichnet, daß anstelle eines Teils der Kunststoffolienbänder andere Materialien, z.B. Metallfolien, Papierbahnen, mit den übrigen Kunststoffolienbändern abwechselnd aufeinander geschichtet und miteinander gesiegelt werden.

8. Verfahren nach einem oder mehreren der Ansprüche 1 bis 6, dadurch gekennzeichnet, daß die Behandlungsschritte Kühlen, Dehnen und Prägen des Folienverbundes nach seinem Ablösen von der Walzenfläche in allen möglichen Kombinationen vorgenommen werden.

9. Verfahren zum Herstellen einer mehrlagigen Dickfolie aus Folienverbunden, bei dem Folienverbunde anstelle der Kunststoffolienbänder als Ausgangsmaterial aufeinandergeschichtet und gemäß den Verfahrensschritten nach den Ansprüche 5 und 6 miteinander gesiegelt werden.

## Claims

1. A process for producing a multi-layer film composite comprised of biaxially and/or monoaxially stretched and/or unstretched thermoplastic plastics film webs, which are sealed with one another by application of pressure and heat, in which process the plastics film webs are fed separately and at a distance from one another to a heatable roll surface and are moved along said roll surface, and each plastics film web is additionally heated before contacting the heatable roll surface, and pressure is exerted onto each plastics film web at the point where it is fed onto roll surface, the film composite being built up by the continuous, additive feeding and sealing of individual, moved plastics film webs, which, in alternating order, are free of sealing layers and provided with at least one sealing layer, onto a moved first plastics film web, until a predetermined final thickness is achieved, and being chilled after release from the roll surface by means of a jet of cooling air and/or by means of chill rolls and/or by means of a cooled twin-belt press, and/or being embossed on one or both surfaces.

2. The process as claimed in claim 1, characterized in that plastics film webs of the same type or of different types are mutually sealed.

3. The process as claimed in claim 2, characterized in that the mono- and/or biaxially stretched plastics film webs, which are alternately sealing layer-free and provided with a sealing layer and are super-imposed and sealed together, comprise the same polymeric material, the film webs having a higher melting temperature than the sealing layers.

4. The process as claimed in claim 1, characterized in that the processing temperature is kept below the melting temperature $T_{m1}$ of the stretched plastics film webs.

5. The process as claimed in claims 3 and 4, characterized in that the processing temperature T of the film webs is chosen so as to be equal to/greater than the melting temperature or sealing temperature $T_{m2}$ of the sealing layers and inferior to the melting temperature $T_{m1}$ of the polymeric material of the film webs.

6. The process as claimed in claim 3, characterized in that, after release from the roll surface, the film composite is guided over a roll arrangement comprising driven rolls of different diameters, and a tensile stress is exerted onto the film composite by these driven rolls, whereby the film composite is stretched in order to counteract its curling tendency.

7. The process as claimed in claim 1, characterized in that, instead of a number of the plastics film webs, webs of other materials, such as metal foils and paper webs, are alternately super-imposed with the plastics film webs and are mutually sealed.

8. The process as claimed in one or several of claims 1 to 6, characterized in that the treatment steps of cooling, stretching and embossing are carried out in all possible combinations after release of the film composite from the roll surface.

9. A process for producing a multi-layer thick film from film composites, in which process, instead of plastics film webs, film composites are super-imposed as starting materials and are mutually sealed according to the process steps of claims 5 and 6.

## Revendications

1. Procédé de production d'un stratifié multicouche, qui contient des bandes de feuilles en matière plastique thermoplastiques étirés biaxialement et/ou monoaxialement et/ou non étirés, qui sont scellées las unes aux autres par application de pression et de chaleur, procédé dans lequel les bandes de feuilles en matière plastique sont acheminées séparément et à distance les unes des autres à une surface de cylindre pouvant être chauffée et guidées le long de cette surface de cylindre, et chaque bande de feuille en matière plastique est chauffée en outre avant de s'appliquer sur la surface de cylindre pouvant être chauffée et une pression est appliquée à chaque bande de film synthétique directement à son point d'application sur la surface de cylindre, et dans lequel le stratifié est réalisé par application et scellage continus cumulés de bandes de feuilles en matière plastique individuelles en mouvement, qui sont en alternance exemptes de couche de scellage et revêtues d'au moins une couche de scellage, sur une première bande de feuille en matière plastique en mouvement jusqu'à une épaisseur finale prédéterminée, et est refroidi, lorsqu'il quitte la surface de cylindre, par soufflage d'air froid et/ou par des cylindres de refroidissement et/ou par une presse à double bande refroidie, et/ou est gaufré sur une face ou deux faces.

2. Procédé selon la revendication 1, caractérisé en ce que des bandes de feuilles en matière plastique identiques ou différentes sont scellées les unes aux autres.

3. Procédé selon la revendication 2, caractérisé en ce que les bandes de feuilles individuelles mono- et/ou biaxialement étirées, exemptes de couche de scellage et revêtues de couches de scellage, appliquées l'une sur l'autre en alternance et constituées du même matériau polymère sont scellées les uns aux autres, lesdites bandes de feuilles présentant une température de fusion plus élevée que les couches de scellage.

4. Procédé selon la revendication 1, caractérisé en ce que la température de traitement est maintenue en dessous de la température de fusion $T_{m1}$ des bandes étirées de feuilles en matière plastique.

5. Procédé selon les revendications 3 et 4, caractérisé en ce que la température de traitement T des bandes de feuilles est sélectionnée pour être égale/supérieure à la température de fusion ou à la température de scellage $T_{m2}$ des couches de scellage et inférieure à la température de fusion $T_{m1}$ de la matière polymère des bandes de feuilles.

6. Procédé selon la revendication 3, caractérisé en ce que le stratifié, après avoir quitté la surface de cylindre, est acheminé sur un agencement de rouleaux ayant des rouleaux entraînés de différents diamètres et une traction est exercée par ceux-ci sur le stratifié qui est dilaté pour contrecarrer sa tendance au tuilage.

7. Procédé selon la revendication 1, caractérisé en ce que, en lieu et place d'une partie des bandes de feuilles en matière plastique, d'autres matières, par exemple des films métalliques, des bandes de papier, sont appliquées en alternance avec les autres bandes de feuilles an matière plastique et leur sont scellées.

8. Procédé selon une ou plusieurs des revendications 1 à 6, caractérisé an ce que les étapes de traitement, à savoir le refroidissement, la dilatation et le gaufrage du stratifié, sont effectuées après que celui-ci a quitté la surface de cylindre dans toutes les combinaisons possibles.

9. Procédé de production d'une feuille multicouche épaisse constituée de stratifiés, dans lequel des stratifiés sont appliqués l'un sur l'autre en lieu et place des bandes de feuilles en matière plastique comme matériau de départ et sont scellés les uns aux autres selon les étapes de traitement des revendications 5 et 6.

Fig. 1

Fig. 2

Fig. 8

Fig. 3

Fig. 4

Fig. 5

FIG. 6a

FIG. 6b

FIG. 7